# EUROPEAN PATENT APPLICATION

(11) **EP 1 197 664 A1**
(43) Date of publication of application: **17.04.2002**
(21) Application number: 01308377.9
(22) Date of filing: 01.10.2001
(51) Int. Cl.: F15B 11/028, F15B 11/042, B60T 13/00

(54) **Pneumatic forcing arrangement**

(30) Priority: 14.10.2000 GB 0025275
(71) Applicant: FEDERAL-MOGUL FRICTION PRODUCTS LIMITED, Manchester M3 2NL (GB)
(72) Inventor: Cotterill, Ian Ronald, High Peak, Derbyshire SK23 0NA (GB)
(74) Representative: Hammersley, John

(57) **Abstract**

A pneumatic forcing arrangement 10 (Fig 1), suitable for actuating an operating rod 101 of a hydraulic braking system 100 under test, effects displacement and applies force to the rod followed by releasing it. Actuation is repeated cyclically, which requires rapid transfer of compressed air to precise demand pressures without hysteresis. A fast response, low flow capacity control valve 40 is controlled to provide a demanded pressure at outlet port 43 and with relay valve means 60, comprising quick release supply and exhaust valves 70 and 80, supplies compressed air to a transducer 20 including a diaphragm coupled to the rod 101. The valves 70 and 80 each respond to a negative pressure between a first port 77, 87 and second port 78, 88 to open and the supply to the port 77 and control valve 40 is by way of restriction means 94 so that in response to a step increase demanded pressure at 43 the control valve input pressure drops and the supply relay valve 70 opens to feed the transducer until the pressure recovers. A drop in control valve outlet pressure vents the transducer through valve 80. Flow means 297 (Fig 2) may be disposed between the supply rely valve and control valve and effect a small delay in opening of the relay valve, and the flow restriction means (294) may comprise separately controllable restrictors to finely tune flows to each of these valves.

## Description

This invention relates to a pneumatic forcing arrangement in which gas pressure determines the force exerted by a forcing member, particularly to such an arrangement capable of providing a rapid increase and/or decrease in such force and more particularly to such arrangement which involves displacement of the forcing member in exerting force.

Pneumatic forcing arrangements involving displacement and force application are known in relation to vehicle braking systems wherein gas pressure, usually from a compressed air reservoir, acts upon diaphragm or analogous piston means within a housing or container to force displacement of an actuating lever or the like to apply a brake. In general the force is applied and released relatively slowly as the volume and density of gas in the forcing container is changed to effect a pressure change on the diaphragm means. It is known in such pneumatic braking systems to employ quick release or dump valves which operate upon a drop in control pressure to exhaust the contained gas directly to atmosphere more rapidly than directing it back through the system of control valves and the like.

It is also known to operate vehicle braking systems hydraulically by way of analogous transducers but wherein liquid pressure is derived directly by manual (or rather pedal) operation of a pump in a master cylinder. Such hydraulic systems are capable of operating quickly upon an initial displacement to establish and remove a braking effect as a step function and are conducive to modulating braking effect rapidly by simple modulation of the applied pedal forces.

There exists within the brake manufacturing industry a need to test such hydraulic braking systems repetitively over prolonged intervals by the continual application and removal of such pedal force and, additionally, to effect changes to, and modulation of, force applied to such master cylinder pedal in a programme that represents dealing with different braking conditions that the system is intended to cope with in use.

It has been found that applying known and controllable mechanical forces accurately and repeatably to such a hydraulic master cylinder at varying levels, including frequent reduction to zero, for prolonged testing intervals, is not without difficulty.

Mechanical devices are complex and expensive and difficult to make programmable to changing braking scenarios.

Hydraulic devices are mcre compact and flexible but expensive in terms of providing close control over forces that vary over large ranges and require displacement of significant liquid volumes rapidly, requiring the use of high pressures and control valves with small orifices that are prone to blockage by contaminants in the liquid, so that filtration and purification of the liquid becomes a significant feature in addition to seal maintenance.

Pneumatic force producing arrangements are less complex than hydraulic ones, not least in terms of sealing due to operating at lower fluid pressures, but there are difficulties caused by the need for such pressures to act over larger areas, with corresponding larger changes in gas volumes to be effected to achieve the aforementioned step function of initiation and release of pedal force on a hydraulic master cylinder, whilst at the same time being responsive to small changes in demand to accommodate minor modulations in the pedal force. Many of the problems arise from inertia in valve arrangements having the capacity both to define large force producing pressures with accuracy and to move large volumes of gas in achieving them and hysteresis in responding to demands to define and release such pressures; fast acting and accurate control valves having the capacity to handle large gas volumes without inertia or hysteresis that inhibits rapid changes are complex and expensive.

Notwithstanding the requirement for such a forcing arrangement within a brake testing environment, a forcing arrangement is not restricted to such use, and preserving the generality of the foregoing it is an object of the present invention to provide a pneumatic forcing arrangement capable of producing large and small variations in force rapidly and controllably that is simple and cost effective to produce and operate.

According to a first aspect of the present invention a pneumatic forcing arrangement comprises gas source means including at least one source of gas at elevated pressure, a force transducer including a housing, a gas port to the housing, diaphragm means operable to divide the housing and displaceable therein in response to a pressure difference thereacross, a forcing member coupled to the diaphragm means for displacement therewith relative to the housing, low inertia, low hysteresis, low flow capacity pneumatic control valve means having a control inlet port coupled to the gas source means, a control outlet port, a control vent port and a control element responsive to an external demand signal, representative of a desired control output port pressure, to effect coupling between the control output port and the control inlet and control vent ports to satisfy said demard from gas supplied to said control inlet port, control means responsive to a demanded transducer force to determine a corresponding transducer demand pressure at the transducer and operable to effect flow of gas from said source means relative to the control outlet port of the control valve means to satisfy said transducer demand pressure thereat, and low inertia, high flow capacity relay valve means having relay inlet port means connected to said gas source means, relay outlet port means coupled to said transducer, relay vent port means coupled to the atmosphere and relay control port means coupled to the control valve means, the relay valve means being responsive to a pressure error between the transducer and the control output port to couple the transducer to said gas source means or the relay vent means.

According to a second aspect of the present invention a friction braking arrangement includes a force actuated hydraulic piston and cylinder arrangement and displaceable operating rod therefor and a pneumatic forcing arrangement as claimed in the preceding paragraph coupled to the operating rod.

The term "flow capacity" is used herein in relation to a valve or valve means to refer to the function relating flow rate through, and pressure drop across, the valve or valve means; "high flow capacity" defining a high flow rate with low pressure drop and "low flow capacity" relating to low flow rate and/or high pressure drop. Furthermore, terms "low" and "high" are used herein in a relative sense and qualitatively, precise values and limits of each being dependant upon the dimensions and functional requirements specified for any particular embodiment.

Embodiments of the invention will now be described by way of example with reference to the accompanying drawings, in which
Figure 1 shows in schematic circuit form a first embodiment of pneumatic forcing arrangement as part of a brake testing arrangement, and
Figure 2 shows in schematic circuit form a second embodiment of pneumatic forcing arrangement containing a modified form of flow restricting means.

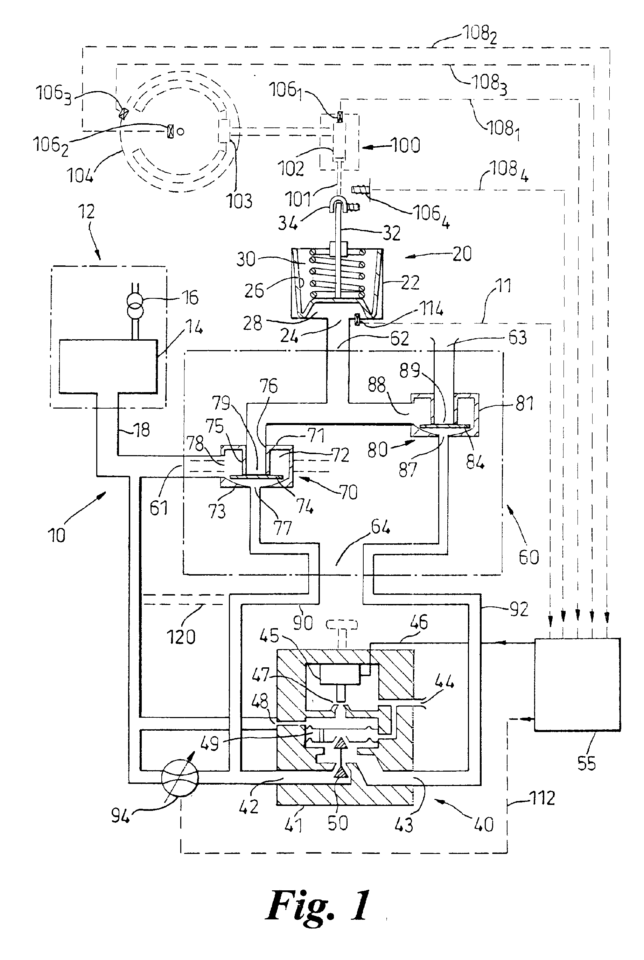

Referring to Figure 1, a forcing arrangement 10 comprises gas source means 12 which includes at least one source of gas at elevated pressure, being a reservoir 14 fed by a pump 16 which entrains atmospheric air and raises it to a storage pressure of about 6 to 7 bar (100 p.s.i) at which it is delivered along source duct 18, and a force transducer 20 comprising a housing 22, a gas port 24 to the housing, diaphragm means 26, in the form of a rolling diaphragm dividing the housing into two chambers 28 and 30 and displaceable within the housing to vary the relative volumes of the chambers, and a forcing member 32, coupled to the diaphragm for displacement therewith relative to the housing and being constrained by the housing at 34 to reciprocal, rectilinear motion.

Additionally, the forcing arrangement 10 comprises, between the source means and transducer, pneumatic control valve means 40 which exhibits a fast response with low flow capacity in responding to signals from control means 55 for low gas flow rates, and relay valve means 60 of high flow capacity which responds to the control valve means 40 for scaling up the flow rates.

The control valve means 40 comprises an electro-pneumatic valve having a body 41, control inlet port 42, control outlet port 43, control vent port 44 and a control element 45 which is responsive to an external electrical demand signal along line 46, representative of a desired control output port pressure, to effect coupling between the control outlet port 43 and the control inlet port 42 and control vent port 44 to satisfy the demand from gas supplied to the control input port.

Conveniently the control valve 40 is of the form described in GB 1604476 which is electrically controllable to maintain a demanded output pressure by impeding bleed orifice 47 between datum port 48 and control vent port 44, causing a pressure to act upon double diaphragm 49 whose movement when the output pressure is not as demanded causes double valve member 50 to connect together either control ports 42 and 43 or control ports 43 and 44. The control valve is slightly modified from that shown in the above specification by provision of bleed orifice pressure from datum port 48 separate from control inlet port 42, for reasons which will become clear.

The control means 55 comprises a dedicated controller or programmable computer which responds to stored data or responds to received signals in accordance with stored parameters to provide control outlet port pressure demand signals to the control element of the control valve means.

The control valve means 40, in keeping with the provision of a fast and accurate response to demands, has components of low inertia and orifices and ports thereof relatively small, that is, it is capable of handling only limited flow rates and exhibits low flow capacity. The control valve means is, however, employed to control the relay valve means 60 to pass high volumes of gas with little impedance or pressure drop in response to a pressure error between the transducer and the control output port 43 of the control valve means, to couple the transducer to said gas source means 12 or vent it.

Generally, the relay valve means 60 comprises relay inlet port means 61 connected to the gas source means 12, relay outlet port means 62 coupled to the transducer port 24, relay vent port means 63 coupled to the atmosphere and relay control port means 64 coupled to the control valve means 40; more particularly it comprises discrete supply and exhaust relay valves 70 and 80 respectively, the supply relay valve 70 being responsive to pressure at the relay control port means 64 either to connect the relay input port means 61 to the relay outlet port means 62 or to isolate it therefrom, and the exhaust relay valve 80 being responsive to pressure at the relay control port means 64 either to connect the relay outlet port means 62 to the relay vent port means 63 or to isolate it therefrom.

In this embodiment the relay control port means 64 is coupled independently to the control outlet port 43 and to the control inlet port 42 of the control valve means, with the exhaust relay valve 80 coupled to the control outlet port 43 by way of duct 92 and the supply relay valve 70 coupled to the control inlet port 42 by way of duct 90. In particular the supply relay valve control port is connected directly in respect of flow and pressure to the control inlet port so that any pressure change in the duct and control inlet port is reflected substantially instantaneously at the supply relay valve control port. Furthermore, the arrangement includes flow restriction means 94 between the gas source means 12 and the control inlet port 42 (or any part of duct 90) such that in responsive to a flow of gas from the control inlet port to the control outlet port in excess of the flow capacity of the restriction means the control valve means effects reduction in the relay control means pressure defined as that of the control inlet port. The flow restriction means 94 is preferably adjustable, manually or otherwise, in respect of the permissible flow rate therethrough.

The supply and exhaust relay valves 70 and 80 are each of the low inertia, low hysteresis diaphragm type of pneumatic quick release valve described in GB 2075640 or the prior art referred to therein.

The supply relay valve 70 comprises a body 71 defining a chamber 72, one wall 73 of which is dished and overlaid by one face of a flexible diaphragm 74 A stand pipe 75 extends into the chamber 72 and the end thereof forms an orifice 76 which overlies the opposite face of the diaphragm 74. A first port 77 opens into the chamber at the dished wall and to one side of the diaphragm, a second port 78 opens into the chamber at the other side of the diaphragm and a third port 79 is defined by the stand pipe orifice adjacent the centre of the diaphragm. The diaphragm is naturally flat and abuts crifice 76, but a force sufficient to overcome the resilience of the diaphragm can displace it to lie against, and conform with, the dished wall. In operation of the valve, a zero or positive pressure difference between the first and second ports closes the third port, a positive pressure difference also serving to lift the periphery of the diaphragm from the dished wall permitting gas flow from the first to second ports. A negative pressure difference between the first and second ports that is of a magnitude which accommodates the different diaphragm face areas exposed to these ports and the resilience of the diaphragm, causes the diaphragm to be displaced against the dished wall and connect the first and third ports, permitting flow between them at high rate and with low resistence whilst closing the second port. The disparity between the pressure differences required to change the position of the diaphragm constitutes hysteresis of the valve.

The exhaust relay valve 80 similarly comprises a body 81 containing a diaphragm 84 and has first, second and third ports 87, 88, 89 respectively.

The second port 78 of the supply relay valve 70 comprises relay input port means 61 and is connected to the source duct 18, the third port 79 of supply relay valve 70 and second port 88 of the exhaust relay valve are connected to each other and comprise relay outlet port means 62 connected to the transducer port 24, and the third port 89 of the exhaust relay valve 80 comprises the relay vent port means 63.

The relay control port means 64 is defined by the first port 77 and first port 87 which, as described above, are connected respectively to the control inlet port 42 and control port 43 by ducts 90 and 92.

Furthermore, the gas duct 90 between the restriction means 94 and the ports 42 and 77 are arranged to contain substantially the same volume of gas, and permit substantially the same flow rate, as gas duct 92 connecting the control outlet port 43 to exhaust relay valve first port 87.

The datum port 48 of the control valve 40 is connected to the gas source means by way of the source duct 18 upstream of the flow restriction means such that the control outlet port (demand) pressure is controlled relative to the pressure of the gas source means12.

For completeness, the transducer forcing member 32 is shown coupled to an operating push rod of a hydraulic braking arrangement 100, the operating rod, shown at 101, being connected to a piston and cylinder arrangement 102 which in turn provides hydraulic fluid at elevated pressure to braking arrangement 103 in known manner. The braking arrangement 103 may be coupled to a vehicle wheel 104, either of a running vehicle or on a dynamometer in which there exists measurement means 106ᵢ to provide signals indicative of the braking force in terms of the hydraulic pressure applied (106₁) and/or the braking torque (106₂) applied to the wheel. Other parameters may be monitored, such as braked surface temperature (106₃) and/or actuator rod displacement (106₄) and all signals are fed to control means 55 on corresponding signal lines 108ᵢ and described further hereafter.

A typically required operating sequence is to rapidly apply a force to the braking arrangement operating rod 101 to effect braking, the braking effort being monitored in terms of hydraulic fluid pressure and/or braking torque and maintained at a pre-determined level or levels thereof by variation (if necessary) in force applied to the operating rod, followed by removing the force on the operating rod to release the brake, thereafter ,and possibly including a delay for the braked surface to cool, repeating the sequence a large number of times.

The control means 55 operates periodically to apply the brake 103 by way of the operating rod, 101 receives sensor signals from the braking system and dynamometer on lines 108₁, 108₂ and 108₃ representative of the hydraulic pressure (actuator rod force), braking torque applied and braked surface temperature, and on line 46 provides a control signal for the pneumatic actuator. Initially, with the braking system inoperative, the transducer forcing member 32 is retracted and the diaphragm 26 disposed adjacent port 24, the container volume 28 being at a minimum and the pressure at port 24 being essentially atmospheric pressure.

Source means 12 provides air continuously at the relatively high pressure of 6 to 7 bar to the second port 78 of supply relay valve 70 and, by way of restriction means 94, to the first port 77 such that absent a pressure difference between the ports the third port 79 is closed by diaphragm 74. Air from the source means is also continuously provided to datum control port 48 of control valve means 40 and, by way of restriction means 94, to control input port 42. At this time, control valve means 40 is "closed" so that the control outlet port 43 is at atmospheric pressure (by way of control vent port 44), as is the connected first port 87 of exhaust relay valve 80. The second port 88 of the exhaust relay valve is connected to the transducer port 24 and therefore also at atmospheric pressure, the diaphragm 84 closing vent port 89 absent a pressure difference between the first and second ports 87 and 88.

When the control means applies a signal to the control valve to demand a predetermined output pressure required by the transducer, the pressure is controlled with respect to the datum port 48 and control vent port 44 but the actual pressure is derived from the air flow between control ports 43 and 42 .

Initially, in order to provide a step response, the valve member 50 is displaced to provide minimum impedance to air flow from control inlet port 42 to control outlet port 43, which flow attempts to raise the pressure in duct 92 and at exhaust relay valve port 87, but exceeds the flow ability of restriction means 94 to replenish it and the pressure in duct 90 falls.

Such pressure fall with respect to the source pressure is reflected between the first and second ports 77 and 78 of supply relay valve 70 and results in opening of that valve, connecting the second and third ports 78 and 79 and delivering air from the source to the transducer 42, rapidly raising the pressure within the chamber 28 thereof and to the second port 88 of exhaust relay valve 80. The effect of increased pressure at said second port 88 effectively inhibits any flow from line 92 through first port 87 and permits pressure in line 92 to raise the demanded value as the pressure in line 90 begins to recover as air enters through restriction means 94. The pressure at control inlet port 42 and supply relay valve first port 77 rises towards the level of the source 12 and when this is reached the pressure difference between second and first ports 76 and 77 is removed and the supply relay valve closes to the passage of further source air to the transducer means.

It will be appreciated that if, when supply relay valve 70 closes, the pressure at the transducer and second port 88 of exhaust relay valve 80 exceeds the demanded pressure at control outlet port 43 and thus relay valve port 87, the exhaust relay valve opens and vents air from the transducer to atmospheric until the pressure at port 88 agrees with the demanded pressure and conditions for valve closure are satisfied; that is the pressure rise overshoots and is restored in an underdamped step response.

Similarly, if recovery of pressure in duct 90 causes the supply relay valve 70 to close before the pressure at the transducer is at the demanded pressure, then air flow from the control outlet port 43 may continue to flow through exhaust relay valve 80 to raise the transducer pressure at a relatively slow rate that represents an overdamped step response rather a reconnect ports 78 and 79 of the relay supply valve. However, if the shortfall is significant, and the flow rate demanded of control outlet port is large, the pressure in line 90 (and across supply relay valve) may dip below the level at which the supply relay valve re-opens, but it is considered more likely that the flow rate from control outlet port 43 via exhaust relay valve 80 will prevent the pressure in line 90 from recovering to a level that closes the supply relay valve until the pressure at the transducer is at the demanded level that completely closes relay valve 80 to flow from the control valve.

Therefore, although the supply relay valve is capable of delivering a large volume of air to the chamber 28 of the transducer means and raising the pressure therein in a very short time interval, if the supply relay valve 70 remains open for too long there is a transducer pressure overshoot until the excess is vented by way of exhaust relay valve 80 and that if it is not open long enough, it may not deliver sufficient air and the deficit be made up by direct flow from the control valve.

Consequently, it is preferred that the flow restriction means 94 is adjustable such that the time taken for the flow restriction to re-establish source pressure in the duct 90 after permitting the control output port and duct 92 to reach said demanded pressure is substantially equal to the time taken for the supply relay valve 70 to supply sufficient air from the source means to the transducer to reach a demanded (target) pressure therein.

The rise of pressure at port 43 and in line 92 is, notwithstanding the relatively small volume of duct 92, potentially retarded by any development of a positive pressure difference between first and second ports 87 and 88 of valve 80 so that any flow through the control valve 40 also attempts to supply the transducer chamber 28. Accordingly, it is preferred that the pressure demand in the duct 92 (and relay valve port 87) is achieved substantially at the time that the port 88 reaches the demanded pressure. Therefore, it is also preferred to have the air ducts 90 and 92 that control relay valves 70 and 80 substantially balanced in respect of internal volumes and flow rates, being conveniently achieved by equal length of equal diameter tubing.

Having exerted a desired level of force on the transducer forcing member 32 for a suitable time or until other conditions are satisfied within the control means 55, the control means sends a signal to the control valve means 40 to demand a low or ambient (zero with respect to atmosphere) pressure from the control outlet port 43. This drop is achieved quickly by way of control vent port 44, the precise rate being dependant upon the volume of duct 92, and in consequence thereof, a pressure difference is also rapidly created between the second and first ports 88 and 87 of exhaust relay valve 80 which displaces diaphragm 84 and equally rapidly couples the second port 88 to the third port 89 and vents the transducer chamber 28 to atmospheric, with the high slew rate of a step function.

Thus the arrangement is able to deliver a large volume of compressed air to the transducer and raise the pressure therein rapidly, and likewise rapidly reduce the pressure, to effect application of a force on, and removal from, hydraulic brake operating rod 101 at a high slew rate, and insofar as it can effect a step response from controller demand it can of course respond to less sudden demands from the controller means and emulate practically any vehicle driver pedal operation.

It will be appreciated that the demanded pressure level set by the control means for the control valve means may be changed from brake application to brake application, each such application of the braking system being accompanied by generating the appropriate pressure in the transducer means at the rapid rate facilitated by supply relay valve 70 and moderated as necessary by the exhaust relay valve 80 in relation to the control outlet port pressure as demanded by the control means.

It will be appreciated that in addition to pe iodically applying and removing operating force from the braking system it is sometimes necessary to modulate an applied force to maintain a desired braking effect, such as constant braking torque that emulates conscious or subconscious modulation of braking pedal effort by a vehicle driver at a rate, say less than 10 Hz, that is relatively low when compared with some automatic brake modulations as found in ABS arrangements.

The arrangement 10 is able to respond to changes in demanded force that is manifested in a signal from the control means setting a different demanded outlet port pressure.

If the change is a decrease, the pressure in duct 92 is reduced by way of control vent port 44 and a resultant pressure difference between ports 88 and 87 of the exhaust relay valve vents the transducer by way of port 89 until the pressure therein falls to that of the first port 87 and control valve outlet port 43.

If the change is an increase, the precise effect depends upon the rate at which the change is demanded and to some extent the level of change. To satisfy such increase, the control valve 40 opens further to receive air from control inlet port 42 and duct 90 and, by way of restriction means 94, the source 12.

If the demand requires a flow rate through the control valve that is within the capacity of flow restriction means to deliver without a significant fall in pressure at control inlet port 42, then flow via control outlet port 43 and first and second exhaust relay valve ports 87 and 88 may raise the pressure within the transducer without creating a pressure drop in duct 90 sufficient to open supply relay valve 70. However, if the change in demanded pressure requires a change to be effected at a significant rate and to a higher level that requires a significant inflow of air from the source means, such change in flow rate through control outlet port 43 may exceed the flow capacity of the restriction means 94 and create a pressure drop in duct 90, with consequential opening of the supply relay valve 70.

Thus it will be seen that control is effected in the same manner as if by way of the low inertia, low hysteresis, but low flow capacity control valve means 40 alone and with the rapid response to change of demanded outlet pressure of such valve, but with the added functionality that when the flow rate required to satisfy an increased demand is beyond that deliverable by the control valve means supply relay valve means operates in support and when a reduction in pressure is required such pressure is vented other than by way of the control valve means at a rate beyond the capacity of the control valve means.

It will be seen that notwithstanding the control of large volumes of air and large pressure changes, the use of discrete low inertia quick release valves as relay valves facilitates achievement of rapid rise and fall times to desired levels of output force without the slow response times and hysteresis effects normally associated with any high flow capacity valves other than those of extreme complexity.

As discussed above, the ability to balance the relative opening and closing of the supply and exhaust relay valves so that they coincide and avoid underdamped or overdamped response by simple flow restriction means and the adjustability thereof also contributes to the cost-effective simplicity of the arrangement. It has been found that the degree of balance between pressure rise overshoot (due to the supply relay valve 70 closing later than the transducer pressure reaching a demanded pressure obtained at the control outlet port 43) and undershoot (due to the supply relay valve 70 closing before the transducer pressure has reached the demanded pressure) is dependant upon the response of the control valve means and the volume of air in the ducts 90 and 92 that control the relay valves. A smaller volume of each contributes to a faster response but a smaller bandwidth (of transducer pressures reached without overshoot or undershoot), whereas a larger bandwidth is achieved at the expense of a slower response.

It has been found that a simple manually adjustable flow restriction means is capable of tuning a particular configuration (having regard to indeterminate and possibly unequal volumes within the ducts 90 and 92) to function without overshoot or undershoot for a wide range of demanded transducer pressures provided the response time is not made too short by reducing the volumes of the ducts 90 and 92, but if desired, and in view of the simplicity of the tuning adjustment, tuning may be effected automatically by the control means 55 via line 112 in response to monitoring the rate of rise of pressure in the transducer by sensor 114 so that the restriction to flow can be optimised for particular repeated demand pressures whilst having small duct volumes and fast response times.

It will be appreciated that the particular type of exhaust relay valve which permits gas flow between the first and second ports is needed if a demanded transducer pressure is to be achieved in an underdamped arrangement by way direct flow from the control valve outlet port. However, as discussed above, it is possible to effect, by decreasing the flow rate to control valve means through restriction means 94, operation wherein any demanded increase in transducer pressure is accompanied by opening of the supply relay valve 70 to satisfy that demand without such flow through the exhaust relay valve.

Other variations are possible, for example, the gas source means 12 may comprise, instead of a single source for both the relay valve means and the control valve mean, separate sources for each, and which separate sources may be at different pressures.

It will be appreciated that although the invention has been described with reference to gas source means producing compressed air which is most conveniently vented to ambient atmosphere, it is possible to employ any suitable gas or gas mixture which is circulated in a closed system, and references to venting to atmosphere should be read to include an atmosphere of a collector of such vented gas for re-use.

It will be appreciated that the flow restriction means 94 may supply gas to the control inlet port and duct 90 other than proximate the control inlet port as is shown in this schematic representation, such as part way along the duct or at the supply relay valve control port.

If the supply relay valve 70 is of the type described in the aforementioned GB 2075640 having a bleed orifice through the diaphragm 74 thereof, such orifice may be made sufficient to effect supply to the control valve means and replace flow restriction means 94, but without the adjustability in use of the latter, or may be used in combination with flow restriction means and other flow control elements.

Although the above description has concentrated upon a single flow restrictior means that is configureable in combination with the gas containing volumes of ducts 90 and 92 and/or control means 55, it will be appreciated that other configurations are possible, and greater structural complexity may be offset by ease of operating configuration.

Instead of having a direct connection between the supply relay valve control port 77 and the control inlet port 42 that permits instantaneous flow from the supply relay valve control port and response to pressure drop at the control inlet port, the supply relay valve control port may be connected to the control input port by way of flow modifying means which is operable to effect a small delay in rapid pressure fall at the supply relay valve control port relative to the control inlet port, thereby permitting the control output port pressure to commence rising to a level for closing exhaust relay valve before the supply relay valve is caused to open by rapid pressure drop at the control port 77.

The flow modifying means may take a variety of forms, such as valve means which is responsive to a predetermined pressure difference thereaccross to open to the flow of gas from the supply relay valve control port to the control inlet port, and/or a flow restrictor which permits a pressure drop in the part of duct 90 between it and the control inlet port prior to replenishment from, and pressure drop in, that part of the duct 90 connected to the supply relay valve control port.

Valve means in the form of at least one one-way valve which may be unseated by a relatively low pressure difference is particularly suitable, providing arrangements are made for restoring gas pressure to the supply relay valve control port from the gas source. This may be achieved by connecting the flow restriction means 94 to the supply relay valve control port or flow modifying means at the supply relay valve side thereof, thereby feeding the control inlet port 42 solely by way of the flow modifying means, or by effecting bi-directional flow through the flow modifying means, such as by having opposed one-way valves in parallel, to permit gas flow to the supply relay valve control port from the control inlet means 42 and restriction means 94 connected thereto.

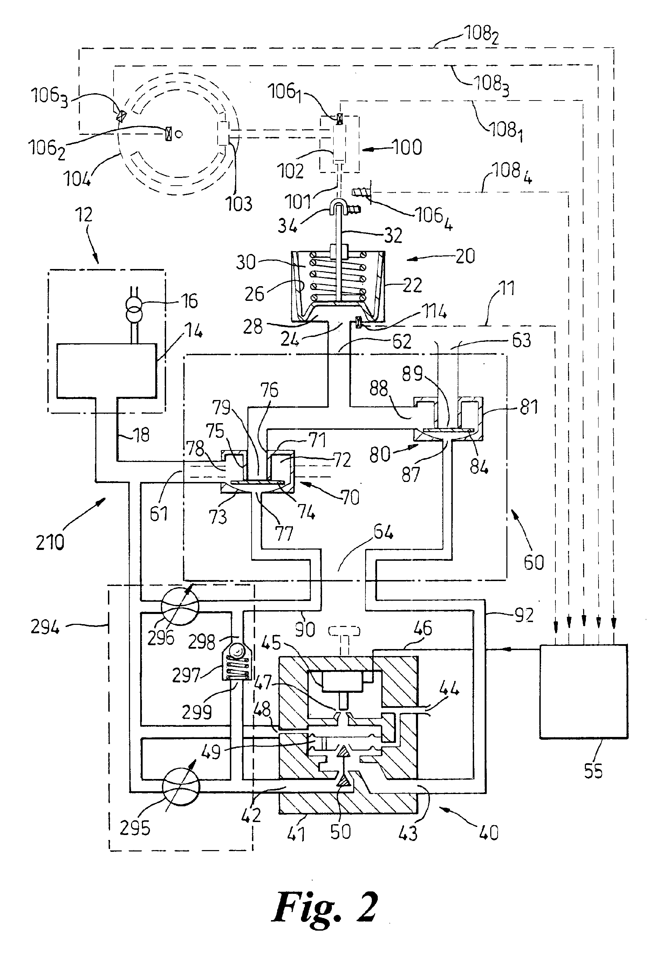

A particularly advantageous arrangement shown in Figure 2, in which forcing arrangement 210 is in most respects identical to the forcing arrangement 10 described above and like elements are given identical reference numbers; operation of the elements is also the same and will not be repeated except to highlight the differences. The forcing arrangement 210 differs in that flow restriction means 94 is replaced by flow restriction means 294, disposed between source 12 and control inlet port 42 and supply relay valve control port means 60, which comprises two flow restrictors 295 and 296 and flow modifying means 297 in the form of a one-way pressure responsive valve. The outflow of restrictor 295 is connected to the control inlet port 42 and the outflow of restrictor 296 is connected to the duct 90, and thereby to valve 70 of the relay valve means 60. The outflow of restrictor 296 is also connected to inlet 298 of one-way valva 297, whose outlet 299 is connected to outflow of restrictor 295 at inlet port 42. The one-way valve permits fluid flow in a direction from the supply relay valve 70 and flow restrictor 296 towards the control inlet port 42 but inhibits flow in the opposite direction. The restrictors 295 and 296 are preferably, but not necessarily, both adjustable and in operation adjusted such that each typically has approximately half of the flow capacity of the single flow restrictor 94.

The operating principle of the forcing arrangement 210 is similar to that of arrangement 10 insofar as a demanded pressure rise at outlet port 43 is met by removing air from duct 90 by way of flow modifying valve 297. Prior to initial operation the pressures at the inlet and outlet of valve 297 are equal the valve is closed. In response to a sudden demand for increased pressure at control valve outlet port 43 gas is taken from inlet port 42 and contributes to the rise in pressure at port 43. The pressure at port 42 and outlet 299 of the flow modifying valve thus falls with respect to the inlet 298 of the valve and the supply relay valve control port 77, and when a predetermined difference exists, the valve opens permitting gas from the remainder of the duct to enter port 42 and supply relay valve control port pressure to fall as before, albeit with a small delay occaisioned by the pressure difference required to open valve 297.

As discussed above in respect of arrangement 10, the removal or gas form duct 90 supplements the restricted flows through restrictors 295 and 296, but thereafter, recovery of pressure in duct 90 to close supply relay valve 70 is a function of, and controlled by, flow restrictor 296 alone. That is, supply relay valve closure behaviour is governed by setting flow restrictor 296 whereas supply relay valve opening is governed by setting the flow restrictor 295 relative to 296, notwithstanding that settings of both flow restrictors contribute to the behaviour.

The flow restrictiors 295 and 296 may be manually adjustable or, as described above, one or both may be controlled and varied during operation by control means 55.

It will be appreciated from Figure 2 that the flow restrictor 295 might be omitted without depriving valve ports 42 and 77 of source gas; also that flow restrictor 296 might be omitted provided some means of by-passing valve 297 is effected to permit gas to flow to the supply relay valve control port. Although such arrangement involving a single flow restrictor lose some of the control provided by two such restrictors, it may be appropriate, and applicable to all embodiments, to make the flow modifying means adjustable in terms of flow rate and/or operating pressure.

Irrespective of the flow restriction means, and flow modifying means if appropriate, the relay valve means 60 may comprise discrete relay valves of different construction or a single relay valve, provided the relay valve means is operable in response to a demand pressure obtained from the control outlet port 43 and without the possibility of a flow rate from the control outlet port that retards pressure rise. That is, the relay valve means may operate without a control port pressure drop per se derived by flow restriction to the control valve inlet port and thus without flow restriction means 94 or 294, as indicated by ghosted link duct 120 (Figure 1).

Although the transducer means has been described as including a rolling diaphragm because of its low resistance to motion, any other form, such as a piston or fixed, elastic diaphragm may be employed if desired.

The control means 55 may be complex and be responsive both to forcing instruction signals and feedback signals within a closed loop or may be an open loop system which simply initiates a sequence of predetermined forcing movements. With or without such feedback, the forcing movements may be stored and reproduced in sequence or may be effected manually under operator control. If such forcing demands are made manually without modification by feedback from the forced system, the control element of the control valve means may be directly operated by said manual control rather than by way of an electrical signals.

The control valve means may take a form other than as shown at 40 and/or may be operated manually by physical contact as an alternative to a signal from external control means.

Whereas the embodiment 10 has been described with reference to a testing arrangement for a vehicle hydraulic braking arrangement, it will be seen that the arrangement, being of compact form and simple construction, may be arranged in a vehicle to provide an interface with a hydraulic braking system of the vehicle whereby braking forces are effected in response to manual (driver) or sensed conditions.

The forcing arrangement described herein may be employed for exerting force by way of a forcing member, including displacement if necessary, in apparatus other than associated with braking systems and the above description should be construed as exemplary rather than limiting.

## Claims

1. A pneumatic forcing arrangement (10; 210) comprising
gas source means (12) including at least one source of gas at elevated pressure, a force transducer (20) including a housing (22), a gas port (24) to the housing, diaphragm means (26) operable to divide the housing and displaceable therein in response to a pressure difference thereacross, and a forcing member coupled to the diaphragm means for displacement therewith relative to the housing,
low inertia, low hysteresis, low flow capacity pneumatic control valve means (40) having a control inlet port (42) coupled to the gas source means, a control outlet port (43), a control vent port (44) and a control element (45) responsive to an external demand signal, representative of a desired control output port pressure, to effect coupling between the control output port and the control inlet and control vent ports to satisfy said demand from gas supplied to said control inlet port,
control means (55) responsive to a demanded transducer force to determine a corresponding transducer demand pressure at the force transducer (20) and operable to effect flow of gas from said source means relative to the control outlet port of the control valve means to satisfy said transducer demand pressure thereat, and
low inertia, high flow capacity relay valve means (20) having relay inlet port means (61) connected to said gas source means, relay outlet port means coupled to said transducer, relay vent port means (63) coupled to the atmosphere and relay control port means (64) coupled to the control valve means, the relay valve means being responsive to a pressure error between the force transducer and the control output port to couple the force transducer gas port to said gas source means or the relay vent means.

2. An arrangement as claimed in claim 1 **characterised in that** the relay valve means comprises discrete supply and exhaust relay valves (70, 80), the supply relay valve (70) being responsive to pressure level at the relay control port means (64) either to connect the relay input port means (61) to the relay outlet port means (62) or to isolate it therefrom, and the exhaust relay valve (80) being responsive to pressure level at the relay control port means (64) eitherto connect the relay outlet port means (62) to the relay vent port means (63) or to isolate it therefrom.

3. An arrangement as claimed in claim 2 **characterised by** flow restriction means (94; 294) between the gas source means (12) and the control inlet port (42) and in which the relay control port means (64) of the relay valve means is coupled independently to the control outlet port and to the control inlet port of the control valve means (40), and the control valve means is responsive to a flow of gas from the control inlet port (42) to the control outlet port (43) in excess of the flow capacity of the restriction means to effect reduction in the relay control means pressure derived from the control inlet port.

4. An arrangement as claimed in claim 3 **characterised in that** the supply relay valve (70) is coupled to the control input port (42) and the exhaust relay valve (80) is coupled to the control outlet port (43).

5. An arrangement as claimed in claim 4 **characterised in that** each said relay valve (70, 80) has first, second and third ports (77, 78, 79; 87, 88, 89), and is responsive to a first port pressure below the second port pressure to connect the second and third ports and to a first port pressure equal to or greater than the second port pressure to isolate the third port from the second port, the first, second and third ports (77, 78, 79) of the supply relay valve (70) comprising the relay control port means (64) connected to the control valve control input port, the relay inlet port means and the relay outlet port means (62) respectively, and
the first, second and third ports (87, 88, 89) of the exhaust relay valve (80) comprising the relay control port means (64) connected to the control valve control outlet port, the relay outlet port means (62) and relay vent port means (63) respectively.

6. An arrangement as claimed in claim 5 **characterised in that** the exhaust relay valve (80) is operable to admit gas flow between the first and second ports (87, 88) thereof in response to the demanded control outlet port pressure of the control valve exceeding the pressure at the force transducer.

7. An arrangement as claimed in any one of claims 3 to 6 **characterised in that** the control valve means (40) is responsive to a pressure drop across a control orifice (47) between a control datum port (48) and the control vent port (44) defined by said control element to effect gas flow to said demand pressure at the outlet control port, said control datum port being connected to the gas source means by-passing the flow restriction means.

8. An arrangement as claimed in any one of claims 5 to 7 **characterised in that** the flow restriction means (94; 294) is adjustable.

9. An arrangement as claimed in claim 8 in which the flow restriction means is adjustable by the control means.

10. An arrangement is claimed in any one of claims 3 to 9 **characterised in that** the supply relay valve control port is connected directly in respect of flow and pressure to the control input port.

11. An arrangement as claimed in any one of claims 3 to 9 **characterised in that** the supply relay valve control port (77) is connected to the control input port (42) by way of flow modifying means (297) operable to delay pressure fall at the supply relay valve control port relative to the control input port.

12. An arrangement as claimed in claim 11 in which the flow restriction means (294) is operable to connect the control input port to the gas source by way of said flow modifying means.

13. An arrangement as claimed in claim 12 **characterised in that** the flow restriction means (294) comprises a pair of flow restrictors (295, 296) each connected to the gas source and one each to the supply relay valve control port and control input port and opposite sides of the flow modifying means.

14. An arrangement as claimed in claim 13 when dependent on claim 8 or claim 9 **characterised in that** the flow restrictors (295, 296) are adjustable independently of each other.

15. An arrangement as claimed in any one of claims 11 to 14 in which the flow modifying means (297) comprises valve means responsive to a predetermined pressure difference thereacross to open to the flow of gas.

16. An arrangement as claimed in any one of claims 5 to 15 **characterised in that** the supply and exhaust relay valves (70, 80) comprise low inertia, low hysteresis diaphragm type pneumatic quick release valves.

17. An arrangement as claimed in claim 16 **characterised in that** at least the exhaust relay valve (80) has a bleed orifice extending between the first and second ports (87, 88).

18. An arrangement as claimed in claim 17 **characterised in that** the supply relay valve (70) has a bleed orifice extending between the first and second ports (77, 78) comprising flow restriction means.

19. A friction braking arrangement including a force actuated hydraulic piston and cylinder arrangement (100) and displaceable operating rod therefor (101) and a pneumatic forcing arrangement (10; 210) as claimed in any one of the preceding claims coupled to the operating rod.
